# DEMANDE DE BREVET EUROPEEN

(11) **EP 1 103 873 A1**
(43) Date de publication de la demande: **30.05.2001**
(21) Numéro de dépôt: 99123684.5
(22) Date de dépôt: 29.11.1999
(51) Int. Cl.: G04D 1/00

(54) **Ensemble comprenant une rangée d'éléments d'assemblage et procédé d'utilisation d'un tel ensemble**

(71) Demandeur: Eta SA Fabriques d'Ebauches, 2540 Grenchen (CH)
(72) Inventeur: Simond, Francois, 2903 Villars-sur-Fontenais (CH); Koelbl Erwin, 2613 Villeret (CH)
(74) Mandataire: Laurent, Jean

(57) **Abrégé**

Pour faciliter et accélérer l'utilisation manuelle ou mécanisée d'éléments d'assemblage de petite taille tels que des clavettes ou des rondelles, il est prévu de les fournir sous forme d'un ensemble comprenant une rangée de ces éléments (7a-7n), qui sont solidaires d'une base commune et sont liés à cette base ou aux éléments voisins par des ponts (15) de moindre résistance. L'ensemble peut être réalisé sous la forme d'une bande (11) qui forme la structure de chaque élément et les ponts. Cette bande peut en outre constituer un outil pour mettre en place l'élément terminal (7a) et pour rompre les ponts rattachant cet élément à la bande.

## Description

La présente invention concerne un ensemble comprenant une rangée d'éléments d'assemblage dont chacun comporte un organe de fixation destiné à être engagé dans ou sur une pièce à assembler.

L'invention concerne aussi un procédé d'utilisation d'un tel ensemble d'éléments d'assemblage, et aussi l'utilisation d'un tel ensemble pour assembler des pièces d'horlogerie.

La manutention des moyens d'assemblage de petite taille, en particulier dans les domaines de la microtechnique tels que la micromécanique, l'horlogerie, le jouet ou les domaines analogues, est spécialement difficile et coûteuse. Si un assemblage est effectué manuellement, chaque élément d'assemblage doit d'abord être présenté et orienté individuellement pour qu'un opérateur puisse le saisir au moyen d'un outil, puis le mettre en place et le fixer, le cas échéant à l'aide d'un second outil. Si l'assemblage est automatisé, cela exige des machines compliquées et coûteuses susceptibles de défaillances non négligeables.

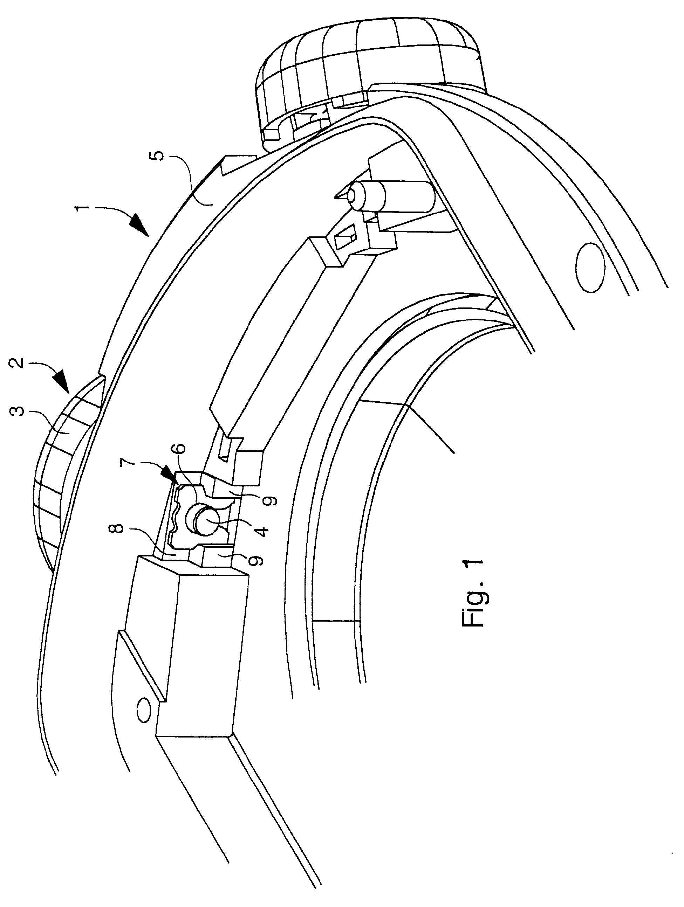

Par exemple, on se référera à la construction illustrée par la figure 1 qui représente une partie d'une boîte de montre 1 équipée d'un poussoir 2 ayant une tête 3 et une tige 4 qui traverse la carrure 5 de la boîte de manière coulissante, un ressort de compression étant monté entre la tête 3 et la carrure 5. Pour empêcher que le poussoir s'échappe vers l'extérieur, la tête de la tige 4 émergeant à l'intérieur de la carrure 5 est pourvue d'une gorge annulaire 6 dans laquelle est engagée une clavette plate 7 en forme de U renversé. La clavette 7 s'appuie contre une surface intérieure 8 de la carrure pour bloquer le coulissement de la tige 4 vers l'extérieur. Dans le cas présent, la clavette 7 est maintenue en place par deux épaulements intérieurs 9 de la carrure, c'est-à-dire que la gorge 6 doit être assez large pour permettre à la tige 4 de coulisser à travers la clavette. Celle-ci constitue ainsi un élément d'assemblage du poussoir 2 sur la carrure 5.

Habituellement, de telles clavettes sont fabriquées individuellement et livrées en vrac. Pour le montage du poussoir 2, elles se présentent donc sans ordre dans un récipient. Un opérateur doit, à l'aide de brucelles non magnétiques, en saisir une par la base du U et l'orienter dans le sens du montage, ici verticalement. Il s'agit ensuite de glisser la clavette 7 dans la gorge 6 tout en maintenant pressé le poussoir 2. Non seulement ces opérations sont fastidieuses et requièrent beaucoup de dextérité, mais en outre elles sont relativement lentes et renchérissent donc le montage.

La présente invention vise à rendre plus aisée et rapide l'utilisation manuelle ou mécanisée de moyens d'assemblage de ce genre ou autres. Un but particulier est de simplifier les opérations nécessaires au positionnement d'un élément d'assemblage avant sa mise en place proprement dite. Un autre but particulier est de supprimer ou simplifier l'utilisation d'outils pour la mise en place de l'élément d'assemblage. Encore un autre but est de faciliter l'opération consistant à séparer un élément d'assemblage des autres.

Une idée de base de l'invention consiste à fournir une série d'éléments d'assemblage sous la forme d'un ensemble dans lequel ces éléments sont rattachés les uns des autres dans des positions fixes, donc dans une orientation prédéterminée. Ceci permet de manipuler l'ensemble par préhension d'une manière beaucoup plus commode qu'un élément isolé, et d'amener un élément de la rangée directement en regard de l'endroit où il doit être mis en place. Un principe similaire est utilisé dans les agrafeuses de bureau ou autres, où des agrafes en forme de U sont fournies sous forme d'une bande dans laquelle les agrafes adjacentes sont collées les unes aux autres. L'agrafage s'effectue alors au moyen d'un outil spécial qui frappe sur l'agrafe terminale pour la détacher de la bande et la chasser dans les pièces à assembler. La présente invention apporte à ce principe des modifications qui permettent notamment d'éviter le recours à un tel outil pour séparer successivement les éléments d'assemblage.

Selon un premier aspect de l'invention, il est prévu un ensemble du type défini dans l'introduction, caractérisé en ce qu'il comporte une base qui forme au moins partiellement la structure de chaque élément d'assemblage et qui forme en outre, entre les éléments d'assemblage consécutifs, au moins un pont à résistance mécanique réduite reliant lesdits éléments d'assemblage.

Ainsi, on peut saisir manuellement ou mécaniquement l'ensemble composé des éléments d'assemblage, l'utiliser comme outil pour amener l'élément terminal de l'ensemble dans la position appropriée à son montage, le mettre en place, puis le séparer de la base ou par un simple mouvement de flexion, de torsion ou autre, qui casse les ponts le reliant à l'ensemble. Il peut s'agir d'un mouvement dudit ensemble ou d'un mouvement des pièces à assembler.

Selon un second aspect de l'invention, il est prévu un ensemble du type spécifié dans l'introduction, caractérisé en ce qu'il comporte une base qui supporte chaque élément d'assemblage et qui constitue un organe de préhension de l'ensemble, chaque élément d'assemblage étant rattaché à ladite base par au moins un pont à résistance mécanique réduite.

Cette solution diffère de la précédente en ce que les éléments d'assemblage ne sont pas rattachés par les ponts directement les uns aux autres, mais à une base commune qui constitue un organe de préhension et un outil jetable servant à la mise en place des éléments successifs. Pour le reste, elle offre les mêmes avantages que la précédente.

Dans une forme de réalisation préférée des deux aspects de l'invention, ladite base est faite d'un matériau rigide, ce qui facilite les manipulations et la mise en place des éléments d'assemblage successifs. Toutefois la base peut aussi être faite d'un matériau relativement mou, mais il faudra alors employer dans certains cas un guide pour conduire l'ensemble et/ou rompre ses ponts lors de son utilisation.

Un autre aspect de l'invention concerne un procédé d'utilisation d'un ensemble d'éléments d'assemblage selon le premier ou le second aspect de l'invention, procédé dans lequel :
- on saisit ou guide ledit ensemble pour amener l'organe de fixation de l'élément d'assemblage situé à une extrémité de la rangée, dit élément terminal, dans une position déterminée près de ladite pièce agencée pour le recevoir,
- on engage l'organe de fixation de l'élément terminal sur ou dans ladite pièce, et
- on impose audit ensemble une déformation suffisante pour rompre le ou les ponts rattachant l'élément terminal à l'ensemble, l'élément d'assemblage suivant devenant ainsi un élément terminal.

Ladite déformation peut comporter notamment une flexion, une torsion, un cisaillement, une traction ou une combinaison de ces différents modes de déformation. On notera aussi que ladite pièce agencée pour recevoir l'élément d'assemblage peut être un autre élément d'assemblage, par exemple s'il s'agit d'engager une rondelle sur un goujon ou sur une vis.

D'autres caractéristiques et avantages de l'invention apparaîtront dans la description suivante de divers modes de réalisation, présentés à titre d'exemples non limitatifs en référence aux dessins annexés, dans lesquels :
- la figure 1 est une vue en perspective partielle d'une boîte de montre équipée d'un élément d'assemblage dont le montage a été réalisé selon l'invention;
- la figure 2 est une vue analogue à la figure 1, illustrant plus particulièrement la mise en place de l'élément d'assemblage au moyen d'un ensemble dont il fait partie;
- la figure 3 est une vue partielle de l'ensemble représenté à la figure 2;
- la figure 4 représente une variante de l'ensemble de la figure 3;
- la figure 5 représente une autre variante d'un tel ensemble;
- la figure 6 représente encore une autre variante d'un tel ensemble,
- la figure 7 représente encore une autre variante d'un tel ensemble;
- la figure 8 représente un autre mode de réalisation d'un ensemble de ce genre, où les éléments d'assemblage sont rattachés individuellement à une base commune, et
- la figure 9 représente encore un autre mode de réalisation d'un ensemble selon l'invention.

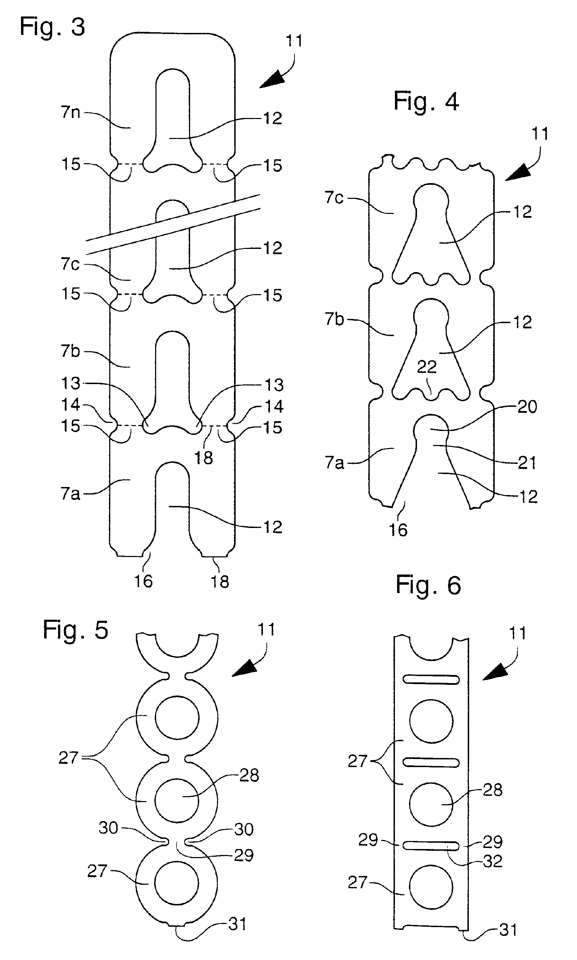

On a décrit plus haut, en référence à la figure 1, comment la clavette plate 7 sert à assembler le poussoir 2 avec la carrure 5 d'une boîte de montre 1. Les figures 3 et 4 représentent deux modes de réalisation d'un ensemble comprenant une rangée de telles clavettes.

L'ensemble représenté à la figure 3 est constitué d'une base en forme de bande 11 faite de préférence d'un matériau rigide et dans laquelle a été découpée une rangée d'ouvertures centrales 12 présentant chacune, à leur extrémité inférieure, deux évasements latéraux 13. On a également découpé dans la bande 11 une série d'encoches latérales 14 placées chacune en regard d'un des évasements 13, si bien que chaque paire de découpes 13 et 14 délimite dans la bande une zone rétrécie qui forme un pont 15 entre les parties adjacentes de la bande. Dans le cas présent, il y a chaque fois deux ponts 15 juxtaposés, qui relient deux clavettes 7 consécutives en forme générale de U. Dans le dessin, ces clavettes sont numérotées 7a, 7b,... 7n. La clavette 7a située à l'extrémité inférieure de la bande est dite clavette terminale et sera utilisée en premier. On remarque que son ouverture centrale 12 est ouverte vers le bas, où elle présente une entrée évasée 16 due aux évasements 13 et facilitant sa mise en place ultérieure.

Chaque paire de ponts 15 constitue une zone à résistance mécanique réduite par rapport aux autres parties de la bande 11, de sorte qu'il est possible de briser cette zone par une flexion localisée le long d'une ligne de rupture 18 pour séparer la clavette terminale de la suivante. On a également représenté cette ligne de rupture 18 au bas de la clavette terminale 7a pour montrer qu'une clavette précédente a déjà été détachée de la bande.

Bien entendu, au lieu d'être rétrécis par les découpes 13 et 14, les ponts 15 de moindre résistance pourraient être créés d'une autre manière, par exemple par des trous ou des entailles dans la bande 11, ou par un traitement rendant la matière plus fragile dans ces zones. La bande 11 peut être faite de tout matériau ayant une rigidité suffisante pour la fonction que doivent remplir les clavettes 7, mais pouvant être brisé par une déformation qu'on imposera à la bande selon sa conformation, en particulier une flexion dans le cas présent. Ce matériau peut être notamment une matière plastique ou un métal tel que l'acier, ou le laiton extra dur. Pour l'application prévue ici dans une montre, l'acier inoxydable est un matériau préféré.

Dans l'exemple décrit ici, tout l'ensemble constitué par la base 11 est fait d'une seule pièce et d'un seul matériau. On peut toutefois envisager que les clavettes comportent des parties faites d'autres matériaux, par exemple des revêtements ou des garnitures en matière plastique, fixées sur une base métallique qui formerait alors la structure principale des clavettes 7 et les ponts 15.

Dans la variante illustrée par la figure 4, on a réutilisé les mêmes numéros de référence que dans la figure 3 pour désigner des éléments analogues. La principale différence est que, dans le cas de la figure 4, chaque ouverture 12 des clavettes 7 présente, entre son entrée évasée 16 et sa partie supérieure 20 sensiblement circulaire, un passage rétréci 21 ayant une largeur légèrement inférieure au diamètre du fond de la gorge 6 du poussoir 2 décrit en référence à la figure 1, ce qui permet à la clavette de se maintenir d'elle-même sur la tige 4 du poussoir à la manière d'un circlip. Dans ce but, une encoche supplémentaire 22 est ménagée dans la base de la forme en U de la clavette, afin de la rendre plus flexible dans son plan par écartement des branches du U lors de la mise en place de la clavette.

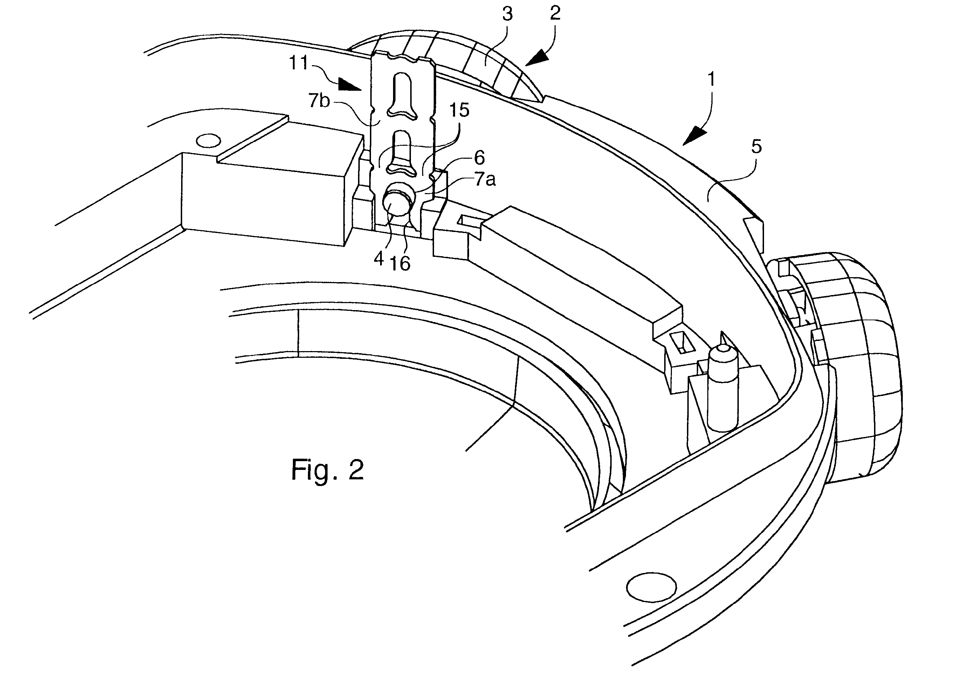

On se référera aux figures 1 et 2 pour la description du montage du poussoir 2 dans la boîte de montre 1 au moyen d'un ensemble de clavettes en forme de bande 11 du genre représenté dans les figures 3 et 4. Si le montage est effectué manuellement, l'opérateur installe le poussoir 2 muni de son ressort sur la boîte 1 et appuie sur la tête 3 du poussoir pour que la gorge 6 de la tige 4 soit bien accessible à l'intérieur de la boîte 1. Le poussoir peut être maintenu pressé soit par une main de l'opérateur, soit par une surface appropriée d'une pièce dite posage, supportant la boîte 1.

L'opérateur saisit la bande 11 de façon à amener sa clavette terminale 7a en position verticale au-dessus de la gorge 6 et l'insère dans cette gorge jusqu'à ce que le fond de l'ouverture 12 bute contre la tige 4. La clavette est ainsi en place, l'ouverture 12 servant d'organe de fixation de la clavette sur la tige 4. L'opérateur n'a alors qu'à incliner la bande 11 perpendiculairement à son plan pour créer un effort de flexion maximal sur les ponts 15 qui maintiennent la clavette terminale 7a, ce qui brise ces ponts et laisse au bout de la bande une nouvelle clavette terminale 7b qui pourra être employée de la même façon. L'assemblage du poussoir sur la montre est ainsi terminé, puisque le poussoir sera bloqué par la clavette dès qu'on relâchera la pression sur lui.

La figure 5 représente une autre variante de la bande 11 décrite plus haut. Dans ce cas la bande 11 est formée d'un ensemble de rondelles circulaires 27 dont chacune est destinée à servir d'élément d'assemblage, par exemple si son ouverture centrale 28 est engagée sur une vis ou un rivet, cette ouverture servant d'organe de fixation de la rondelle. Chaque rondelle 27 est rattachée à la suivante par un seul pont central 29 formant une zone de moindre résistance mécanique. Chaque pont 29 peut être défini par une paire d'encoches latérales 30 qui mordent dans le pourtour des rondelles, afin que la ligne de rupture 31 ne dépasse pas ce pourtour.

La variante de la figure 6 diffère de celle de la figure 5 par le fait que la bande 11 est composée de rondelles 27 de forme carrée ou rectangulaire, dont chacune est rattachée à la suivante par deux ponts 29 qui peuvent être situés, par exemple, le long des bords de la bande. Ainsi, chaque paire de ponts 29 est définie par une seule fente transversale 32 ménagée dans la bande. Cette fente pourrait être remplacée par une empreinte ou un autre traitement qui rend la bande 11 plus fragile dans cette zone.

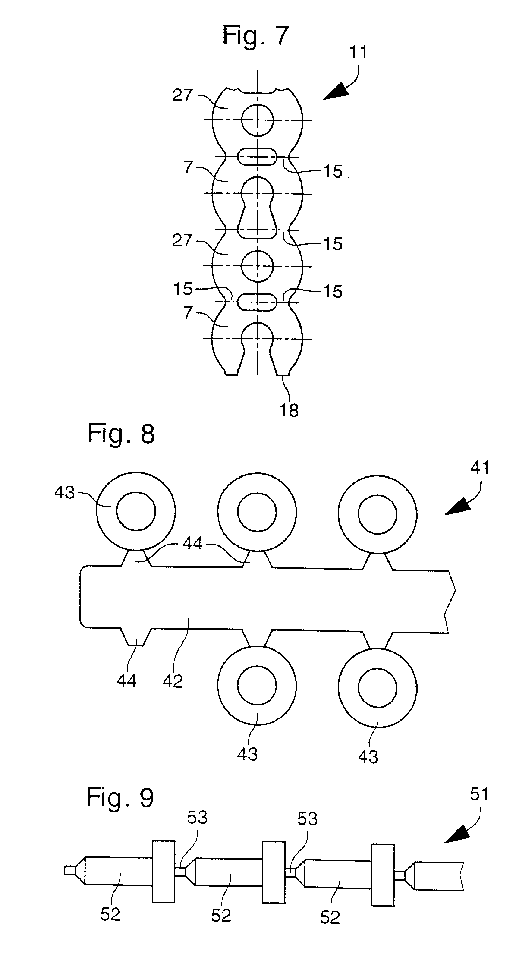

La figure 7 représente une variante dans laquelle l'ensemble formé par la bande 11 comprend plusieurs jeux successifs de deux éléments d'assemblage différents, chaque jeu comprenant une rondelle 27, analogue à celles de la figure 5, et une clavette 7 analogue à celles de la figure 4. Chaque élément est relié au suivant par un ou deux ponts 15 qui, une fois rompus, définiront une ligne de rupture 18 de l'élément terminal. Bien entendu, chaque jeu peut comprendre un nombre quelconque d'éléments d'assemblage, en fonction de l'application spécifique pour laquelle l'ensemble est conçu.

On notera que dans chacune des différentes variantes décrites ci-dessus, la base en forme de bande 11 peut être fabriquée très facilement, par exemple par moulage si elle est en matière plastique ou par étampage si elle est en métal. D'autre part, dans toutes ces variantes l'extrémité arrière de la bande peut être formée par une partie jetable servant d'organe de préhension pour manipuler les derniers éléments d'assemblage de la bande.

La bande 11 peut être livrée sous forme d'une bande de grande longueur, enroulée sur un tambour. De préférence, cette bande sera conduite jusqu'à l'endroit du montage par un guide permettant de pousser en avant la bande et de la déformer pour casser les ponts. Un tel système est particulièrement avantageux si l'assemblage est mécanisé.

Dans le mode de réalisation illustré par la figure 8, il est prévu un ensemble 41 comprenant une base 42 et une rangée d'éléments d'assemblage 43 rangés le long du pourtour de la base 42, à laquelle ils sont rattachés individuellement par des ponts 44. Les éléments 43 sont représentés ici sous la forme de rondelles, mais ils pourraient avoir une configuration quelconque et notamment une épaisseur différente de celle de la base 42. Cette base peut aussi avoir n'importe quelle forme appropriée, par exemple celle d'une barre ou d'une plaque polygonale ou circulaire. Comme les éléments 43 ne sont pas rattachés directement les uns aux autres, les ponts 44 qui les supportent peuvent être faits d'un autre matériau approprié, par exemple si les éléments 43 sont faits d'un matériau difficile à casser. Le matériau des ponts peut être celui qui constitue la base 42. En particulier, les ponts 44 peuvent être faits d'un matériau qui adhère aux éléments d'assemblage 43 suffisamment pour les soutenir, mais qui se déchire par flexion ou torsion si l'on fait pivoter la base 42 pendant que l'élément d'assemblage est emboîté sur ou dans la pièce avec laquelle il doit coopérer, ou par cisaillement ou traction si l'on tire sur la base 42.

La figure 9 représente un ensemble en forme de barre 51, comprenant une rangée d'éléments d'assemblage allongés 52 tels que des chevilles, des vis ou des clous, qui sont disposés bout à bout et sont rattachés les uns aux autres par des ponts centraux 53 de section relativement faible. Ces ponts peuvent être rompus par torsion, par flexion ou par cisaillement de la barre.

On notera que dans tous les modes d'exécution décrits ci-dessus et dans d'autres modes qu'un homme du métier pourra imaginer, les éléments d'assemblage d'un même ensemble selon l'invention n'ont pas besoin d'être tous semblables. Par exemple, si l'assemblage d'un objet à fabriquer nécessite un jeu de deux ou plusieurs éléments d'assemblage différents, un ensemble selon l'invention peut comporter successivement un grand nombre de jeux de tels éléments, notamment comme le montre la figure 7.

## Revendications

1. Ensemble comprenant une rangée d'éléments d'assemblage (7, 27, 52) dont chacun comporte un organe de fixation (12, 28) destiné à être engagé dans ou sur une pièce à assembler, l'ensemble étant caractérisé en ce qu'il comporte une base (11, 51) qui forme au moins partiellement la structure de chaque élément d'assemblage et qui forme en outre, entre les éléments d'assemblage consécutifs, au moins un pont (15, 29, 53) à résistance mécanique réduite reliant lesdits éléments d'assemblage.

2. Ensemble comprenant une rangée d'éléments d'assemblage (43) dont chacun comporte un organe de fixation destiné à être engagé dans ou sur une pièce à assembler, l'ensemble étant caractérisé en ce qu'il comporte une base (42) qui supporte chaque élément d'assemblage (43) et qui constitue un organe de préhension de l'ensemble, chaque élément d'assemblage étant rattaché à ladite base par au moins un pont (44) à résistance mécanique réduite.

3. Ensemble selon la revendication 1 ou 2, caractérisé en ce que la base (11) est faite d'un matériau rigide.

4. Ensemble selon l'une des revendications 1 à 3, caractérisé en ce que tous les éléments d'assemblage sont semblables.

5. Ensemble selon l'une des revendications 1 à 3, caractérisé en ce qu'il comprend plusieurs jeux successifs d'éléments d'assemblage (7, 27), chaque jeu comprenant au moins deux éléments d'assemblage différents.

6. Ensemble selon l'une des revendications précédentes, caractérisé en ce que ladite base (11) est en forme de bande.

7. Ensemble selon la revendication 6, caractérisé en ce que les éléments d'assemblage (7, 27) sont plats.

8. Ensemble selon l'une des revendications 1 à 5, caractérisé en ce que ladite base (42, 51) est en forme de barre.

9. Procédé d'utilisation d'un ensemble d'éléments d'assemblage selon la revendication 1 ou 2 pour assembler des pièces dont l'une au moins est agencée pour recevoir un tel élément d'assemblage, dans lequel :
(I) on saisit ou guide ledit ensemble pour amener l'organe de fixation de l'élément d'assemblage situé à une extrémité de la rangée, dit élément terminal, dans une position déterminée près de ladite pièce agencée pour le recevoir,
(II) on engage l'organe de fixation de l'élément terminal sur ou dans ladite pièce, et
(III) on impose audit ensemble une déformation suffisante pour rompre le ou les ponts rattachant l'élément terminal à l'ensemble, l'élément d'assemblage suivant devenant ainsi un élément terminal.

10. Procédé selon la revendication 9, caractérisé en ce que ladite déformation comporte une flexion.

11. Procédé selon la revendication 9, caractérisé en ce que ladite déformation comporte une torsion.

12. Procédé selon la revendication 9, caractérisé en ce que ladite déformation comporte un cisaillement.

13. Procédé selon la revendication 9, caractérisé en ce que ladite déformation comporte une traction.

14. Utilisation d'un ensemble selon la revendication 1 ou 2 pour assembler des pièces d'horlogerie.
